# EUROPÄISCHE PATENTSCHRIFT

(11) **EP 1 511 596 B1**
(45) Veröffentlichungstag und Bekanntmachung des Hinweises auf die Patenterteilung: **19.07.2006**
(21) Anmeldenummer: 03757003.3
(22) Anmeldetag: 28.05.2003
(51) Int. Cl.: B23Q 39/04, B23B 3/30

(54) **MEHRSPINDELDREHMASCHINE**
MULTI-SPINDLE LATHE
TOUR MULTIBROCHE

(30) Priorität: 07.06.2002 DE 10226272
(43) Veröffentlichungstag der Anmeldung: 09.03.2005
(73) Patentinhaber: Index-Werke GmbH & Co. KG Hahn & Tessky, 73730 Esslingen (DE)
(72) Erfinder: TRAUTMANN, Günther-Heinrich, 73230 Kirchheim (DE)
(74) Vertreter: Beck, Jürgen
(86) Internationale Anmeldenummer: PCT/EP2003/005617
(87) Internationale Veröffentlichungsnummer: WO 2003/103892

(56) Entgegenhaltungen:
- DE-A- 10 016 897
- US-A- 5 697 270
- US-B1- 6 324 949

## Beschreibung

Die Erfindung betrifft eine Mehrspindelwerkzeugmaschine umfassend ein Maschinengestell, eine am Maschinengestell um eine Spindeltrommelachse drehbar gelagerte Spindeltrommel, mindestens zwei in der Spindeltrommel in Spindelpositionen angeordnete Werkstückspindeln, deren Werkstückaufnahme jeweils um eine Spindelachse drehbar ist, einen stirnseitig der Spindeltrommel und der Werkstückspindeln angeordneten Arbeitsraum, eine stationär am Maschinengestell vorgesehene Vielzahl von Spindelstationen, in welche die Werkstückspindeln durch Drehen der Spindeltrommel um die Spindeltrommelachse bringbar sind, wobei ein Teil der Spindelstationen als Bearbeitungsstationen ausgebildet ist, in denen eine Bearbeitung der Werkstücke durchführbar ist, und wobei mindestens eine der Spindelstationen als Werkstückentnahmestation oder Werkstückeinsetzstation ausgebildet ist (siehe, z.B., US-6, 324, 949-B).

Bei derartigen Mehrspindeldrehmaschinen besteht generell das Problem, daß die Bearbeitung der Werkstücke äußerst zeitkritisch ist, das heißt Optimierungen der Abläufe zum Einsparen von Bruchteilen von Sekunden durchgeführt werden müssen, um eine optimale wirtschaftliche Betriebsweise dieser Mehrspindeldrehmaschinen zu erreichen.

Dies setzt auch voraus, daß in der Werkstückentnahmestation für das Entnehmen der Werkstücke nur äußerst kurze Zeiten zur Verfügung stehen, wenn verhindert werden soll, daß das Entnehmen der Werkstücke und gegebenenfalls eine zusätzliche Bearbeitung in der Werkstückaufnahme Zeiträume erfordern, die größer sind als die Bearbeitungszeiträume in den Bearbeitungsstationen, und somit durch das Entnehmen der Werkstücke in den übrigen Bearbeitungsstationen Zeit verschwendet wird.

Es ist zwar bekannt, die Werkstückentnahme dadurch zu optimieren, daß der Spindeltrommel mit den Werkstückspindeln gegenüberliegend ebenfalls eine Spindeltrommel mit Gegenspindeln zugeordnet ist, eine derartige Lösung ist jedoch kostenaufwendig.

Der Erfindung liegt daher die Aufgabe zugrunde, eine Mehrspindeldrehmaschine der eingangs beschriebenen Art dadurch zu verbessern, daß mit einfachen Mitteln eine Entnahme von Werkstücken in der Werkstückentnahmestation möglich ist, die sehr rasch erfolgen kann.

Diese Aufgabe wird mit einer Mehrspindeldrehmaschine nach Anspruch 1 gelöst.

Der Vorteil der erfindungsgemäßen Lösung ist darin zu sehen, daß durch das Vorsehen einer drehbaren Werkstückaufnahme die Möglichkeit gegeben ist, innerhalb möglichst kurzer Zeiten Werkstücke in der Werkstückentnahmestation aus der in dieser stehenden Werkstückspindel der Spindeltrommel möglichst rasch zu entnehmen und somit ein schnelles Weiterschalten der Spindeltrommel zu ermöglichen.

Im Zusammenhang mit der Lagerung der Trägereinrichtung wurden bislang keine näheren Angaben gemacht. So sieht ein zweckmäßiges Ausführungsbeispiel vor, daß eine Lagerung der Trägereinrichtung am Maschinengestell außerhalb eines sich ausgehend von einer Stirnseite der Spindeltrommel und von dieser weg erstreckenden Raumbereichs erfolgt. Eine derartige Lagerung der Trägereinrichtung hat den Vorteil daß sie die Zugänglichkeit zu der dem Arbeitsraum zugewandten Stirnseite der Spindettrommet nicht behindert und somit auch eine vorteilhafte Zugänglichkeit zu den auf dieser Seite der Spindeltrommel angeordneten Werkstücken und Werkzeugen ermöglicht.

Besonders günstig ist es, wenn die Trägereinrichtung auf derselben Seite des Arbeitsraums am Maschinengestell gelagert ist wie die Spindeltrommel, so daß eine konstruktiv zweckmäßig realisierbare Lagerung der Trägereinrichtung am Maschinengestell erfolgen kann.

Vorteilhaft ist es dabei, wenn die Trägereinrichtung an einem die Spindeltrommel lagernden Ständer des Maschinengestells gelagert ist, so daß am Maschinengestell keine zusätzlichen Baugruppen für die Lagerung der Trägereinrichtung erforderlich sind.

Eine zweckmäßige Lösung sieht vor, daß die Trägereinrichtung einen am Maschinengestell in einer Tragarmaufnahme gelagerten Tragarm aufweist, so daß eine konstruktiv einfache Lagerung der Trägereinrichtung am Maschinengestell möglich ist.

Prinzipiell kann der Tragarm in der Tragarmaufnahme stationär angeordnet sein. Eine besonders günstige Lösung sieht jedoch vor, daß der Tragarm in der Tragarmaufnahme in Richtung parallel zu einer Spindelachse der in der Werkstückentnahmestation stehenden Werkstückspindel verschiebbar am Maschinengestell gelagert ist, so daß durch den Tragarm und die Tragarmaufnahme bereits eine Bewegung der von der Trägereinrichtung gehaltenen drehbaren Werkstückaufnahme in Richtung der Z-Achse realisierbar ist.

Hinsichtlich der weiteren Ausbildung der Trägereinrichtung wurden bislang keine näheren Angaben gemacht, insbesondere keine Angaben darüber, wie mit der Trägereinrichtung eine Bewegbarkeit der Werkstückaufnahme mindestens in radialer Richtung zur Trommelachse realisierbar ist.

Prinzipiell wäre es dabei denkbar, die Trägereinrichtung mit einem Schlittensystem zu versehen. Eine besonders günstige Lösung sieht jedoch vor, daß die Trägereinrichtung einen um eine Schwenkachse gegenüber dem Maschinengestell schwenkbaren Arm aufweist. Mit einem derartigen schwenkbaren Arm läßt sich in einfacher Weise und mit geringem Raumbedarf eine Bewegbarkeit in radialer Richtung zur Spindeltrommel realisieren.

Insbesondere verläuft dabei die Schwenkachse ungefähr parallel zur Spindeltrommelachse, um eine raumsparende Bewegungskinematik zu erhalten.

Bei einer mit einem Tragarm versehenen Trägereinrichtung besteht entweder die Möglichkeit, den Tragarm in der Tragarmaufnahme auch noch um die Schwenkachse drehbar zu lagern.

Eine besonders günstige Lösung sieht jedoch vor, daß der Arm gegenüber dem Tragarm um die Schwenkachse verschwenkbar ist, so daß der Tragarm seinerseits unverdrehbar und somit stabil in der Tragarmaufnahme gehalten werden kann.

Im einfachsten Fall kann dabei der Arm als in sich steifer Arm ausgebildet sein, so daß mit dem Tragarm die Werkstückaufnahme auf einem Kreisbogen um die Schwenkachse bewegbar ist.

Soll eine komplexere Bewegungsform der Werkstückaufnahme realisierbar sein, wäre es denkbar, an dem Arm noch einen Schlitten vorzusehen, so daß der Schwenkbewegung noch eine Linearbewegung überlagert werden kann.

Eine besonders günstige Lösung sieht jedoch vor, daß der Arm als Knickarm ausgebildet ist und zwei um ein Knickgelenk relativ zueinander bewegbare Teilarme aufweist, wobei die drehbare Werkstückaufnahme an dem Teilarm gehalten ist, der nicht zur Schwenkachse hin verläuft.

Mit einem derartigen Knickarm läßt sich in besonders einfacher Weise eine komplexe Bewegungsbahn der drehbaren Werkstückaufnahme realisieren.

Hinsichtlich der Ausbildung der drehbaren Werkstückaufnahme wurden bislang keine näheren Angaben gemacht. Grundsätzlich wäre es ausreichend, wenn die Werkstückaufnahme relativ zur Trägereinrichtung frei drehbar oder zumindest drehbar antreibbar ist.

Eine hinsichtlich der Vielfalt der Einsatzmöglichkeiten besonders günstige Lösung sieht jedoch vor, daß die drehbare Werkstückaufnahme an einer Gegenspindel angeordnet ist.

Die Gegenspindel schafft die Möglichkeit, ein Werkstück abzustechen, das heißt von einer Werkstoffstange zu trennen, ohne daß ein sogenannter Butzen, das heißt ein Materialzapfen, verbleibt. Besonders vorteilhaft ist es dabei, wenn die Gegenspindel als Synchronspindel ausgebildet ist, das heißt in der Lage ist, mit derselben Drehzahl betrieben zu werden, wie die in der Werkstückentnahmestation stehende Werkstückspindel.

Ferner schafft das Vorsehen einer Gegenspindel noch die Möglichkeit, gegebenenfalls das Werkstück im Bereich seiner Abstechseite bearbeiten zu können.

Sollen bei der Bearbeitung des Werkstücks im Bereich seiner Abstechseite noch umfangreichere Bearbeitungen als reine Drehbearbeitungen realisierbar sein, ist vorzugsweise vorgesehen, daß die Gegenspindel mit einer durch eine Maschinensteuerung steuerbaren C-Achse versehen ist.

Um - wie bereits erwähnt - in der Werkstückentnahmestation das Werkstück abstechen zu können, ist vorzugsweise vorgesehen, daß der Werkstückentnahmestation ein Abstechwerkzeug zugeordnet ist.

Ein derartiges Abstechwerkzeug läßt sich zweckmäßigerweise dadurch der Werkstückentnahmestation zuordnen, daß in dieser ein Abstechschlitten vorgesehen ist.

Soll das aus der Werkstückspindel in der Werkstückentnahmestation entnommene Werkstück noch bearbeitet werden, insbesondere im Bereich seiner Abstechseite, so ist vorzugsweise vorgesehen, daß die Werkstückaufnahme nicht nur in die Werkstückübernahmestellung und die Werkstückabgabestellung bringbar ist, sondern zusätzlich noch in eine Bearbeitungsstellung bringbar ist.

In einer derartigen Bearbeitungsstellung wäre beispielsweise noch eine Bearbeitung durch ein angetriebenes Werkzeug realisierbar. Soll eine Drehbearbeitung erfolgen, ist die drehbare Werkstückaufnahme als Gegenspindel auszubilden und in der Bearbeitungsstellung ein übliches Drehwerkzeug vorzusehen.

Um die Bearbeitung des Werkstücks in der Bearbeitungsstellung so durchzuführen, daß die Werkstückbearbeitung mittels der in der Spindeltrommel vorgesehenen Werkstückspindeln nicht behindert wird, ist vorzugsweise die Bearbeitungsstellung bezüglich der Trommelachse radial außerhalb der Spindeltrommel angeordnet.

Eine günstige Ausführungsform sieht vor, daß die Bearbeitungsstellung auf einer der Spindeltrommel gegenüberliegenden Seite der Schwenkachse angeordnet ist.

Hinsichtlich der in der Bearbeitungsstellung vorgesehenen Werkzeuge sind die unterschiedlichsten Möglichkeiten denkbar. Beispielsweise wäre es denkbar, in der Bearbeitungsstellung bewegbare, beispielsweise durch einen Schlitten bewegbare Werkzeuge vorzusehen.

Da jedoch bereits die Trägereinrichtung eine ausreichende Bewegbarkeit der drehbaren Werkstückaufnahme zur Verfügung stellt, ist aus Gründen einer konstruktiv möglichst einfachen Lösung in der Bearbeitungsstellung mindestens ein stationäres Werkzeug vorgesehen, das ein feststehendes oder aber auch ein rotierendes Werkzeug sein kann.

Hinsichtlich der Bewegbarkeit der drehbaren Werkstückaufnahme..und- des dafür vorgesehenen Raums wurden bislang keine näheren Angaben gemacht. So sieht eine besonders günstige Lösung vor, daß die Werkstückaufnahme in einem Raumbereich bewegbar ist, der zwischen zwei die Spindeltrommelachse schneidenden Ebenen liegt, welche zwischen sich einen Winkel von kleiner als 360° geteilt durch die Zahl der Spindelpositionen einschließen.

Dabei ist die Lage der Ebenen selbst nicht exakt festgelegt. Eine Möglichkeit sieht vor, daß mindestens eine Ebene durch die Spindeltrommelachse und die Schwenkachse der Trägereinrichtung hindurchverläuft.

Eine andere Lösung sieht vor, daß die Ebenen durch die Spindeltrommelachse und beiderseits von der Bearbeitungssteltung zugeordneten Werkzeugen verlaufen, so daß diese Werkzeuge innerhalb des Raumbereichs liegen.

Besonders günstig ist dabei eine Lösung, bei welcher die Werkstückaufnahme mit ihrer Achse auf einer Bahn bewegbar ist, die nahe einer durch die Spindeltrommelachse und die Spindelachse der in der Werkstückentnahmestation stehenden Werkstückspindel verlaufenden Ebene verläuft.

Eine besonders günstige Lösung der erfindungsgemäßen Mehrspindelwerkzeugmaschine sieht, Insbesondere dann, wenn eine Bearbeitung des Werkstücks im Bereich seiner Abstechseite erfolgen soll, vor, daß der Werkstückentnahmestation zwei jeweils mit einer Trägereinrichtung relativ zum Maschinengestell bewegbare drehbare Werkstückaufnahmen zugeordnet sind.

Mit dieser Lösung lassen sich vorteilhafter Werkstücke aus der Werkswckentnahmestation entnehmen und zusätzlich bearbeiten, ohne die Bearbeitung der Werkstücke durch die in der Spindeltrommel vorgesehenen Werkstückspindeln hinsichtlich des Zeltablaufs zu beeinträchtigen.

Um die Werkstücke möglichst raumsparend zwischen der Werkstückübernahmestellung und der Werkstückabgabestellung zu bewegen, ist vorzugsweise vorgesehen, daß die beiden drehbaren Werkstückaufnahmen mit ihrer Achse jeweils auf Bahnen bewegbar sind, die nahe der Ebene durch die Spindeltrommelachse und durch die Spindelachse der in der Werkstückentnahmestation stehenden Werkstückspindel verlaufen.

Im Zusammenhang mit der bisherigen Erläuterung der erfindungsgemäßen Lösungen wurde primär darauf eingegangen, daß in der Werkstückentnahmestation eine Werkstückentnahme aus der In dieser stehenden Werkstückspindel der Spindeltrommel erfolgt. Die erfindungsgemäße Lösung ist jedoch hierauf nicht beschränkt. In gleicher Weise wie eine Werkstuckentnahme kann in der Werkstückentnahmestation auch ein Einsetzen eines Werkstücks in die Werkstückspindel erfolgen, beispielsweise nach einer vorherigen Entnahme eines Werkstücks.

In diesem Fall ist die mindestens eine drehbare Werkstückaufnahme nicht in die beschriebenen Stellungen sondern alternativ oder zusätzlich in eine Werkstückaufnahmestellung bewegbar, in welcher von einer Zufuhreinrichtung das Werkstück zum Einsetzen in die Werkstückspindel übernommen wird.

Die eingangs genannte Aufgabe wird daher auch durch eine Mehrspindeldrehmaschine umfassend ein Maschinengestell, eine am Maschinengestell um eine Spindeltrommelachse drehbar gelagerte Spindeltrommel, mindestens zwei in der Spindeltrommel in Spindelpositionen angeordnete Werkstückspindeln, deren Werkstückaufnahme jeweils um eine Spindelachse drehbar ist, einen stirnseitig der Spindeltrommel und der Werkstückspindel angeordneten Arbeitsraum, eine stationär am Maschinengestell vorgesehene Vielzahl von Spindelstationen, in welche die Werkstückspindeln durch Drehen der Spindeltrommel um die Spindeltrommelachse bringbar sind, wobei ein Teil der Spindelstationen als Bearbeitungsstationen ausgebildet ist, in denen eine Bearbeitung der Werkstücke durchführbar ist, und wobei mindestens eine der Spindelstationen als Werkstückeinsetzstation ausgebildet ist, gelöst bei welcher erfindungsgemäß der Werkstückeinsetzstation eine um eine Achse drehbare Werkstückaufnahme zugeordnet ist, die mittels einer am Maschinengestell angeordneten Trägereinrichtung relativ zu der in der Werkstückeinsetzstation stehenden Werkstückspindel mit mindestens einer radial zur Spindeltrommelachse verlaufenden Richtungskomponente zwischen einer Werkstückübergabestellung,- in welcher die Achse koaxial zur Spindelachse der in der Werkstückeinsetzstation stehenden Werkstückspindel steht, und einer Werkstückaufnahmestellung bewegbar ist und die mittels der Trägereinrichtung in einer Z-Richtung parallel zu der Spindelachse der in der Werkstückeinsetzstation stehenden Werkstückspindel bewegbar ist.

Im übrigen sind weitere Ausführungsformen einer derartigen Mehrspindeldrehmaschine entsprechend den vorstehend beschriebenen Ausführungsformen ausgebildet.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Frontansicht eines ersten Ausführungsbeispiels einer erfindungsgemäßen Werkzeugmaschine mit zwei Gegenspindeln mit Werkstückaufnahmen, wobei eine erste Gegenspindel in einer Werkstückübernahmestellung und eine zweite Gegenspindel in einer Werkstückabgabestellung steht;
- Fig. 2: einen Schnitt längs Linie 2-2 in Fig. 1;
- Fig. 3: eine vergrößerte Darstellung der Frontansicht gemäß Fig. 1;
- Fig. 4: eine vergrößerte Darstellung einer Trägereinrichtung mit einem teilweisen Schnitt durch die Trägereinrichtung und einen die Trägereinrichtung lagernden Bereich des Maschinengestells;
- Fig. 5: eine Ansicht ähnlich Fig. 1 bei welcher die erste Gegenspindel die Werkstückübernahmestellung in Richtung der Werkstückabgabestellung verlassen hat und auch die zweite Gegenspindel die Werkstückübergabestellung verlassen hat;
- Fig. 6: eine Ansicht ähnlich Fig. 1, bei welcher die erste Gegenspindel in einer Bearbeitungsstellung steht, während die zweite Gegenspindel sich in Richtung der Werkstückübernahmestellung bewegt;
- Fig. 7: eine Ansicht ähnlich Fig. 1, bei welcher die zweite Gegenspindel in der Werkstückübernahmestellung steht und die erste Gegenspindel in der Bearbeitungsstellung;
- Fig. 8: eine Ansicht ähnlich Fig. 1, bei welcher die erste Gegenspindel in einer weiteren Bearbeitungsstellung steht und die zweite Gegenspindel noch in der Werkstückübernahmestellung;
- Fig. 9: eine Ansicht ähnlich Fig. 1, bei welcher die erste Gegenspindel in der Werkstückabgabestellung steht und die zweite Gegenspindel noch in der Werkstückübernahmestellung;
- Fig. 10: eine Ansicht ähnlich Fig. 1, bei welcher die erste Gegenspindel wiederum in der Werkstückübernahmestellung steht und die zweite Gegenspindel in einer Bearbeitungsstellung;
- Fig. 11: eine Ansicht ähnlich Fig. 1, bei welcher die erste Gegenspindel noch in der Werkstückübernahmestellung steht und die zweite Gegenspindel in einer weiteren Bearbeitungsstellung;
- Fig. 12: einen Schnitt ähnlich Fig. 2 durch ein zweites Ausführungsbeispiel einer erfindungsgemäßen Mehrspindeldrehmaschine und
- Fig. 13: eine Ansicht ähnlich Fig. 1 des zweiten Ausführungsbeispiels der erfindungsgemäßen Mehrspindeldrehmaschine.

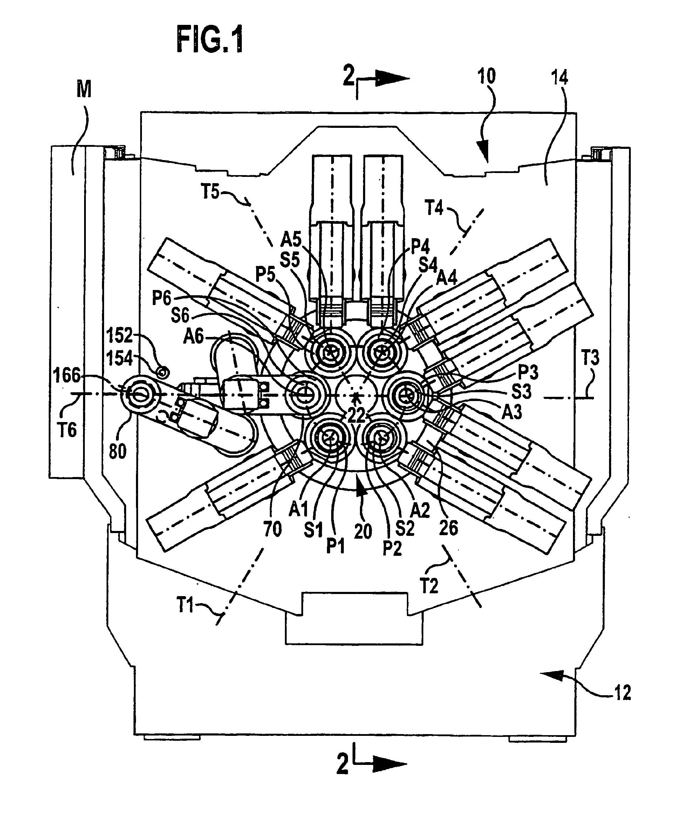

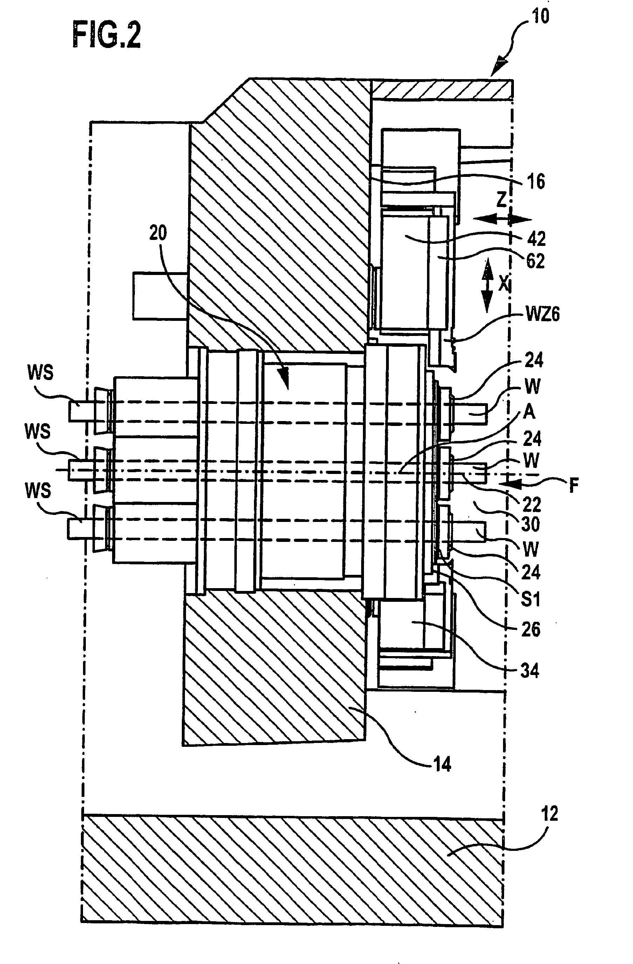

Ein erstes Ausführungsbeispiel einer erfindungsgemäßen Mehrspindeldrehmaschine, dargestellt in Fig. 1 und 2, umfaßt ein als Ganzes mit 10 bezeichnetes Maschinengestell mit einem Untergestell 12 und einem Ständer 14, in welchem eine Spindeltrommel 20 um eine Spindeltrommelachse 22 drehbar gelagert ist.

In der Spindeltrommel 20 sind um die Spindeltrommelachse 22 herum eine Vielzahl von Werkstückspindeln S1 bis S6 vorgesehen, und zwar jeweils in Spindelpositionen P1 bis P6, die vorzugsweise einen Abstand voneinander aufweisen, der einem Winkel von 360° geteilt durch die Zahl der Werkstückspindeln entspricht.

Jede der Werkstückspindeln S1 bis S6 umfaßt eine Werkstückaufnahme 24 zur Aufnahme eines Werkstücks W. Dabei ist das Werkstück W, wie in Fig. 2 dargestellt, beim ersten Ausführungsbeispiel durch eine Werkstoffstange WS gebildet, welche durch die entsprechende Werkstückspindel S hindurchschiebbar und vorzugsweise von einer der Werkstückaufnahme 24 gegenüberliegenden Seite durch ein Magazin zuführbar ist.

Zur Bearbeitung der Werkstücke W sind alle Werkstückspindeln S1 bis S6 jeweils um ihre Spindelachsen A1 bis A6 gegenüber der Spindeltrommel 20 drehend antreibbar.

Ferner sind die Werkstückspindein S vorzugsweise mit ihren Spindelachsen A parallel zur Spindeltrommelachse 22 und jeweils in gleichem Abstand von derselben in der Spindeltrommel 20 angeordnet, wobei die Werkstückspindeln S vorzugsweise ihrerseits aus einer Stirnseite 26 der Spindeltrommel 20 herausragen und mit den stirnseitig der Werkstückspindeln S angeordneten Werkstückaufnahmen 24 einem Arbeitsraum 30 zugewandt sind, der vorzugsweise über dem Untergestell 12 und vor einer quer zur Spindeltrommelachse 22 verlaufenden Frontseite 16 des Ständers 14 angeordnet ist, so daß die in den Werkstückaufnahmen 24 gehaltenen Werkstücke W in den Arbeitsraum 30 zur Bearbeitung hineinragen.

Zur Bearbeitung der Werkstücke W ist die Spindeltrommel 20 um die Spindeltrommelachse 22 derart drehbar, daß die Werkstückspindeln S in einzelnen Spindelstationen T1 bis T6 relativ zu dem Ständer 14 positionierbar sind,
wobei die Zahl der Spindelstationen T1 bis T6 mindestens der Zahl der Werkstückspindeln S1 bis S6 entspricht.

Die Spindeistationen T1 bis T6 sind dabei stationär am Ständer 14 des Maschinengestells 10 vorgesehene Lagen für die einzelnen Werkstückspindeln S, in denen beispielsweise Bearbeitungen der Werkstücke W oder Handhabungsvorgänge bezüglich der Werkstücke W oder auch andere Aktionen, wie beispielsweise Werkstückvermessungen, durchgeführt werden können.

Bei dem in Fig. 1 bis 3 dargestellten ersten Ausführungsbeispiel sind die Spindelstationen T1 bis T5 als Bearbeitungsstationen vorgesehen, während die Spindelstation T6 - wie nachfolgend noch im einzelnen erläutert - als Werkstückentnahmestation vorgesehen ist.

Zur Bearbeitung der Werkstücke W in den Bearbeitungsstationen T1 bis T5 sind diesen Bearbeitungsstationen am Ständer 14 gelagerte Werkzeugschlitten 32, 34, 36, 38, 40, 42, 44 und 46 zugeordnet. Die Zuordnung kann in unterschiedlichster Art und Weise je nach der Auslegung der Mehrspindelwerkzeugmaschine erfolgen. So ist beispielsweise den als Bearbeitungsstationen vorgesehen Spindelstationen T1 und T2 lediglich ein Werkzeugschlitten 32 bzw. 34 zugeordnet. Den als Bearbeitungsstationen vorgesehenen Spindelstationen T3 bis T5 sind jeweils zwei Werkzeugschlitten zugeordnet, nämlich die Werkzeugschlitten 36 und 38 bzw. 40 und 42 bzw. 44 und 46.

Um das fertig bearbeitete Werkstück W in der als Werkstückentnahmestation vorgesehenen Spindelstation T6 von der Werkstoffstange WS abtrennen zu können, ist der Spindelstation T6 ein am Ständer 14 gelagerter Abstechschlitten 48 zugeordnet, welcher ein sogenanntes Abstechwerkzeug AZ trägt.

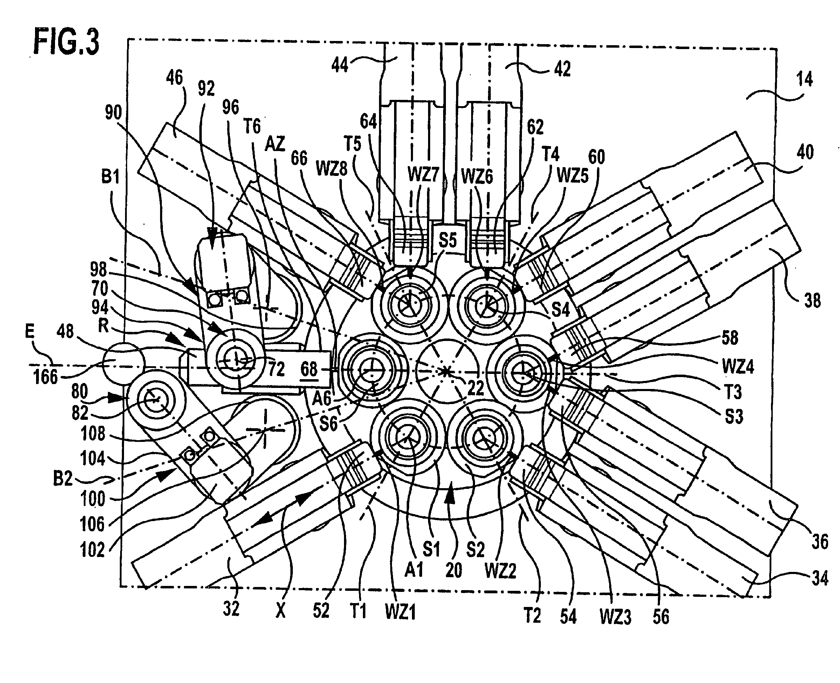

Alle Werkzeugschlitten 32 bis 46 sind mit radial zu den Spindelachsen A der in der jeweiligen Spindelstation T stehenden Werkstückspindel S bewegbaren Werkzeugaufnahmen 52 bis 66 und in diesen gehaltenen Werkzeugen WZ1 bis WZ8 versehen und der Abstechschlitten 48 ist mit einer Werkzeugaufnahme 68 für das Abstechwerkzeug AZ versehen, das ebenfalls radial zur Spindelachse A der in der Spindelstation T6 stehenden Werkstückspindel S bewegbar ist (Fig. 3).

Das Bearbeiten der Werkstücke W erfolgt dabei in der für Mehrspindeldrehmaschinen bekannten Weise durch Weiterschalten der Spindeltrommel 20 dergestalt, daß beispielsweise die Werkstückspindel S1 ausgehend von der Spindelstation T1 sämtliche Spindelstationen T2, T3, T4, T5 und T6 durchwandert, in jeder eine Bearbeitung durch die dieser zugeordneten Werkzeuge WZ erfährt und dann wiederum in der Spindelstation T6 mit dem auf der über die Werkstückaufnahme 24 überstehenden Seite fertig bearbeiteten Werkstück W ankommt.

Hierzu erfolgt ein durch eine Maschinensteuerung M gesteuertes Bewegen der jeweiligen Werkzeugaufnahmen 52 bis 68 in der X-Richtung, die jeweils radial zur Spindelachse A der in der jeweiligen Spindelstation T stehenden Werkstückspindel S verläuft und zusätzlich noch eine durch die Maschinensteuerung M gesteuerte Relativverschiebung zwischen dem Werkzeug WZ und dem Werkstück W in einer zur jeweiligen Spindelachse A parallelen Richtung, einer Z-Richtung, wobei hierbei entweder der gesamte jeweilige Werkzeugschlitten 32 bis 46 gegenüber dem Ständer 14 in Z-Richtung verschiebbar ausgebildet ist und/oder die Werkstückspindeln S relativ zur Spindeltrommel 20 in Richtung ihrer Spindelachsen A verschiebbar sind.

Zum Abstechen des auf dieser Seite fertig bearbeiteten, jedoch noch mit der Werkstoffstange WS verbundenen und in der Spindelstation T6 wieder ankommenden Werkstücks W in dieser Werkstückentnahmestation sind eine erste Gegenspindel 70 und eine zweite Gegenspindel 80 vorgesehen, die beide als Synchronspindeln ausgebildet und wechselweise einsetzbar sind.

Jede dieser Gegenspindein 70, 80 ist mittels einer an dem Ständer 14 gehaltenen Trägereinrichtung 90, 100 relativ zu der in der Spindelstation T6 stehenden Werkstückspindel S und somit relativ zur Spindeltrommel 20 bewegbar, wobei deren Achsen 72, 82 sich in einem Bewegungsbereich, nahe einer Ebene E bewegen, welche durch die Spindeltrommelachse 22 und die Spindelachse A der in der Spindelstation T6 stehenden Werkstückspindel S hindurchverläuft.

Der Bewegungsbereich der Gegenspindeln 70, 80 läßt sich vorzugsweise auch durch einen Raumbereich R zwischen zwei Begrenzungsebenen B1 und B2 definieren, die beide durch die Spindeltrommelachse 22 hindurchverlaufen, auf unterschiedlichen Seiten der Ebene E liegen und jeweils mit der Ebene E einen spitzen Winkel einschließen. Vorzugsweise ist dabei der Winkel zwischen den Ebenen B1 und B2 maximal gleich dem Winkelabstand zwischen Spindelpositionen P aufeinanderfolgender Werkstückspindeln S der Spindeltrommel 20.

Die Trägereinrichtungen 90 und 100 zum Bewegen der Gegenspindeln 70 und 80 wurden im Zusammenhang mit der bisherigen Erläuterung des ersten Ausführungsbeispiels nicht im einzelnen erläutert. Beim ersten Ausführungsbeispiel weist jede der Trägereinrichtungen 90 und 100 einen um ein Knickgelenk 92 bzw. 102 knickbaren Knickarm 94 bzw. 104 auf, der seinerseits um eine Schwenkachse 96 bzw. 106 gegenüber einem am Ständer 14 geführten Tragarm 98 bzw. 108 schwenkbar ist (Fig. 3).

Die Tragarme 98, 108 und die Schwenkachsen 96, 106 sind radial außerhalb der Spindeltrommel 20 angeordnet und verlaufen quer zur Frontseite 16 des Ständers 14. Vorzugsweise sind die Schwenkachsen 96, 106 ungefähr parallel zur Spindeltrommelachse 22 ausgerichtet, so daß die Knickarme 94, 104 sich in ungefähr parallel zur Frontseite 16 verlaufenden Ebenen bewegen.

Damit beeinträchtigen die Trägereinrichtungen 90, 100 nicht den Zugang zur Stirnseite 26 der Spindeltrommel 20 über den Arbeitsraum 30, da ein insbesondere für Wartungs- und Einstellarbeiten vorteilhafter sich über die Stirnseite 26 ausdehnender und von dieser weg erstreckender Freiraum F nicht ständig tangiert wird, sondern die Gegenspindeln 70, 80 nur in einer Werkstückübernahmestellung in diesen eindringen .

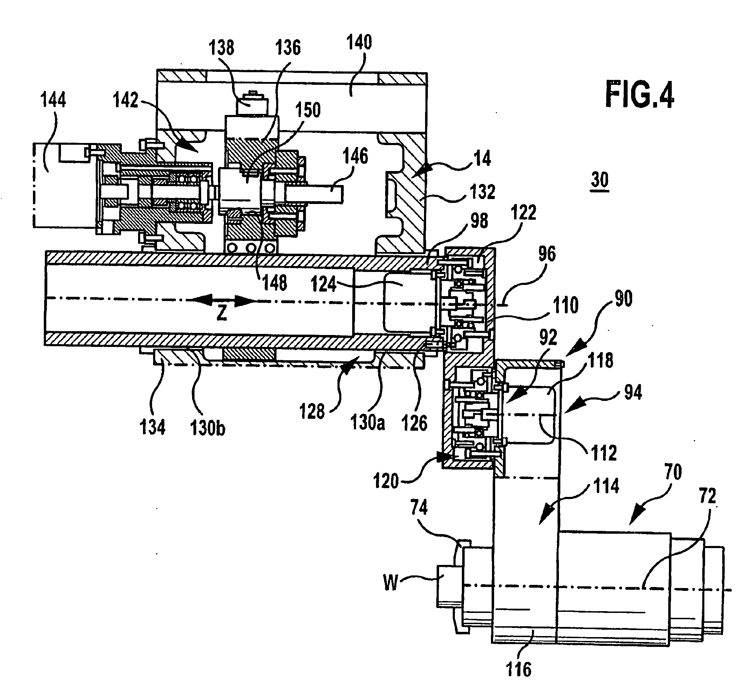

Bei dem dargestellten Ausführungsbeispiel sind die Trägereinrichtungen 90 und 100 im wesentlichen identisch ausgebildet, so daß eine nur detaillierte Beschreibung derselben anhand der in Fig. 4 dargestellten Trägereinrichtung 90 erfolgt, die auch für die Trägereinrichtung 100 entsprechend gilt.

Wie in Fig. 4 dargestellt, umfaßt der Knickarm 94 einen sich ausgehend von der Schwenkachse 96 zum Knickgelenk 92 erstreckenden ersten Teilarm 110, an welchem um eine Knickachse 112 des Knickgelenks 92 knickbar ein zweiter Teilarm 114 gehalten ist, der an seinem dem Knickgelenk 92 abgewandten Ende 116 die Gegenspindel 70 trägt.

Vorzugsweise übergreift der zweite Teilarm 114 den ersten Teilarm 110 im Bereich des Knickgelenks 92 auf dessen dem Ständer 14 abgewandten Seite und es ist beispielsweise in dem zweiten Teilarm 114 ein von der Maschinensteuerung M ansteuerbarer Antrieb 118 integriert, mit welchem beliebige Knickwinkel zwischen den Teilarmen 110 und 114 einstellbar sind, wobei eine Lagereinheit 120 des gesamten Knickgelenks 92 in den an das Knickgelenk 92 angrenzenden Bereich des ersten Teilarms 110 integriert ist.

Ferner ist ebenfalls in den ersten Teilarm 110, und zwar in dessen den Tragarm 98 übergreifendem Bereich, eine Lagereinheit 122 integriert, die die Schwenkbewegung des ersten Teilarms 110 um die Schwenkachse 96 erlaubt, wobei die Schwenkbewegungen selbst durch einen von der Maschinensteuerung M ansteuerbaren Antrieb 124 realisierbar sind, der seinerseits in den Tragarm 98, insbesondere ein vorderes, dem ersten Teilarm 110 zugewandtes Ende 126 desselben integriert ist.

Der Tragarm 98 ist seinerseits vorzugsweise rohrförmig ausgebildet und durchsetzt eine in dem Ständer 14 vorgesehene Tragarmaufnahme 128, in welcher der Tragarm 98 mittels zweier in Abstand voneinander angeordneter Gleitlager 130a und 130b in einer zu den Werkstückspindelachsen A parallel verlaufenden Z-Richtung verschiebbar ist.

Vorzugsweise sind die Gleitlager 130a, b in einer vorderen dem Arbeitsraum 30 zugewandten Seitenwand 132 bzw. einer rückwärtigen dem Arbeitsraum 30 abgewandten Seitenwand 134 des Ständers 14 vorgesehen.

Bei dem dargestellten Ausführungsbeispiel sind die Gleitlager 130a, b so ausgebildet, daß sie den Tragarm 98, welcher beispielsweise als Rohr ausgebildet ist, nicht drehfest festlegen.

Zur drehfesten Festlegung des Tragarms 98 in dem Ständer 14 greift zwischen den Gleitlagern 130a, b am Tragarm 98 ein sich quer zum Tragarm 98 erstreckender Stützarm 136 an, welcher an einem dem Tragarm 98 abgewandten Ende Stützelemente, beispielsweise Stützrollen 138 trägt, die zwischen sich eine Führung 140 einschließen, welche sich ihrerseits parallel zur Z-Richtung erstreckt, so daß die Stützrollen 138 bei der Bewegung des Tragarms 98 in Z-Richtung längs der Führung 140 bewegbar sind, wobei die Stützelemente 138 vorzugsweise insgesamt spielfrei längs der Führung 140 gleiten.

Durch diesen längs der Führung 140 bewegbaren Stützarm 136 erfolgt somit eine drehfeste Lagerung des Tragarms 98 in dem Ständer 14 bei gleichzeitiger Bewegbarkeit des Tragarms 98 längs der Z-Richtung.

Zum Verschieben des Tragarms 98 in Z-Richtung ist ein als Ganzes mit 142 bezeichneter Verschiebeantrieb vorgesehen, welcher einen durch die Maschinensteuerung M ansteuerbaren Antriebsmotor 144 aufweist, mit welchem eine Spindel 146 antreibbar ist, die den Stützarm 136 im Bereich eines Durchbruchs 148 durchgreift und eine Spindelmutter 150 durchsetzt, die fest mit dem Stützarm 136 verbunden ist.

Damit wirkt der Verschiebeantrieb 142 auf den Stützarm 136 und über diesen auf den Tragarm 98 zur Durchführung der gesteuerten Bewegung desselben in Z-Richtung.

Damit ist durch die gesteuerte Verschiebbarkeit des Tragarms 98 in Z-Richtung, das gesteuerte Verschwenken des Knickarms 94 um die Schwenkachse 96 und das gesteuerte Knicken des Knickarms 94 um das Knickgelenk 92 die Gegenspindel 70 sowohl in Z-Richtung als auch in X-Richtung relativ zur in der Spindelstation T6 stehenden Werkstückspindel S bewegbar, und zwar so, daß, wie in Fig. 1 dargestellt, die Gegenspindel 70 mit ihrer Spindelachse 72 koaxial zur Spindelachse A der in der Spindelstation T6 stehenden Werkstückspindel S ausrichtbar ist, so daß in dieser Werkstückübernahmestellung mittels einer an der Gegenspindel 70 vorgesehenen Werkstückaufnahme 74 beispielsweise das in der Werkstückspindel S1 vorhandene bearbeitete Werkstück W auf seiner fertig bearbeiteten Seite erfaßt werden kann und durch Antreiben der Gegenspindel 70 synchron zur Werkstückspindel S ein Abstechen des auf einer Seite fertig bearbeiteten Werkstücks W von der Werkstoffstange WS erfolgen kann.

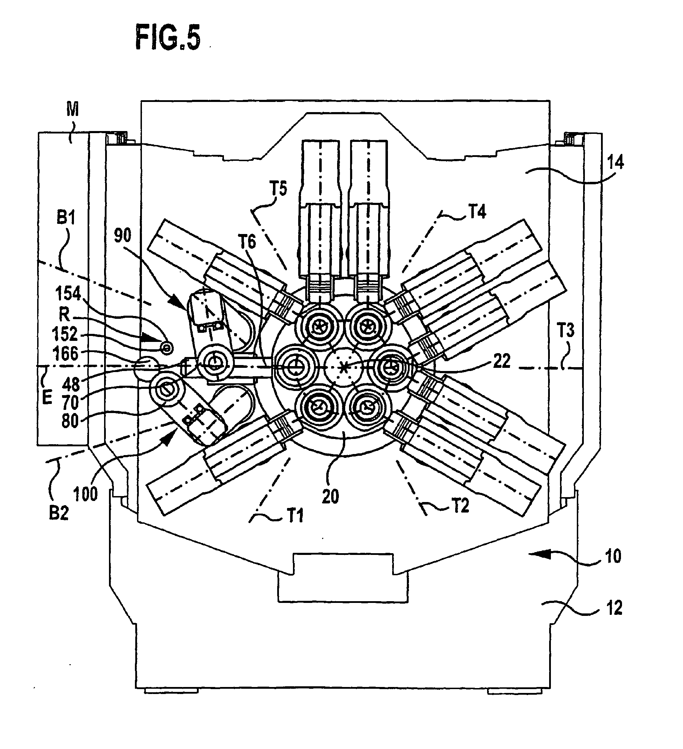

Nach dem Abstechen ist das auf einer Seite fertig bearbeitete Werkstück W durch die Werkstückaufnahme 74 in der Gegenspindel 70 gehalten und wird durch Bewegen der Gegenspindel 70 nahe der Ebene E und innerhalb des durch die Ebenen B1 und B2 festgelegten Raumbereichs R ungefähr radial zur in der Spindelstation T1 stehenden Werkstückspindel S und ungefähr radial zur Spindeltrommelachse 22 nach außen von der Spindeltrommel 20 weg bewegt, wie in Fig. 5 dargestellt.

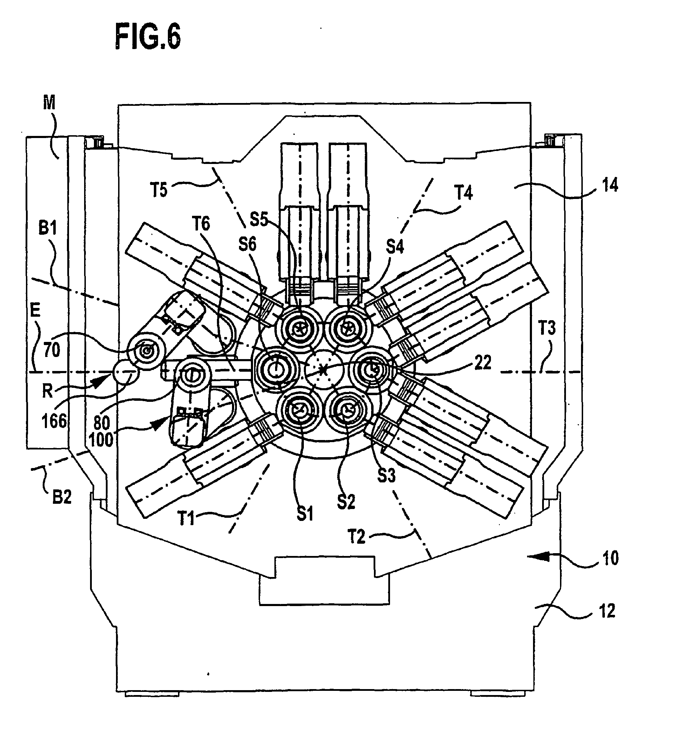

Um die abgestochene Seite des bearbeiteten und in der Gegenspindel 70 gehaltenen Werkstücks W fertig bearbeiten zu können, ist, wie in Fig. 5 dargestellt, auf einer der Spindeltrommel 20 abgewandten Seite des Abstechschlittens 48 und/oder des Tragarms 98 ein Werkzeughalter 152 mit einem Werkzeug 154 im Raumbereich R zwischen den Ebenen B1 und B2 vorgesehen, zu welchem, wie in Fig. 6 dargestellt, die Gegenspindel 70 bewegbar ist, um in einer ersten Bearbeitungsstellung das in der Werkstückaufnahme 74 gehaltene Werkstück W im Bereich seiner Abstechseite fertig zu bearbeiten, wie in Fig. 6 dargestellt.

Während dieser Zeit kann die Maschinensteuerung M die Spindeltrommel weiterschalten.

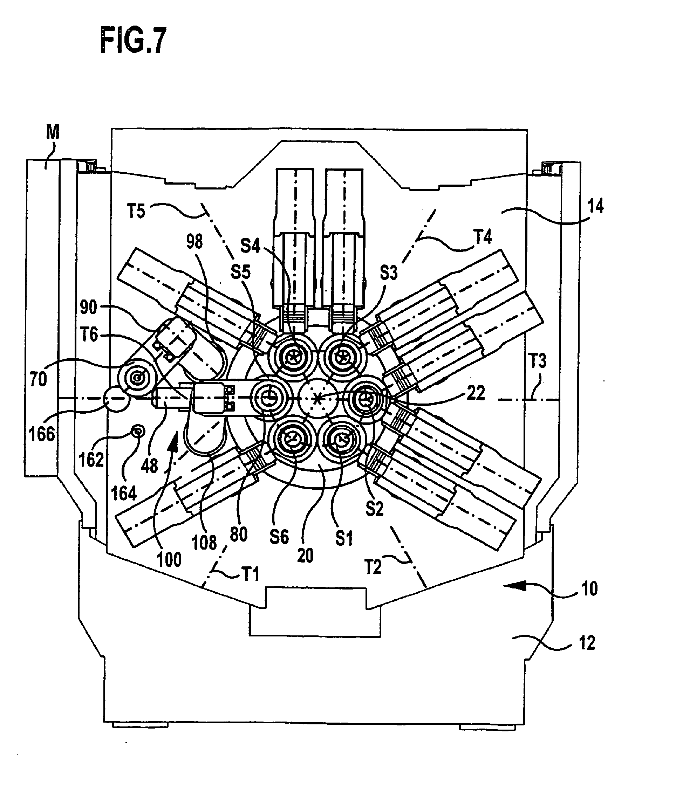

Gleichzeitig kann, wie in Fig. 7 dargestellt, mit der Gegenspindel 80 in der Werkstückübernahmestellung das Abstechen des nächsten fertig bearbeiteten Werkstücks W, beispielsweise in der Werkstückspindel S5, in der Spindelstation T6 erfolgen.

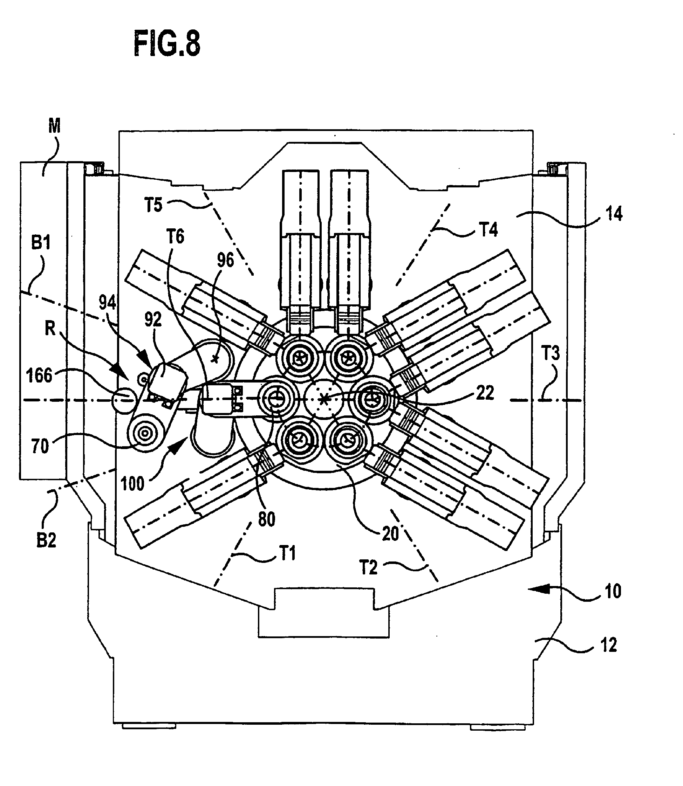

Sofern mehrere Werkzeuge zum Fertigbearbeiten des Werkstücks W im Bereich seiner Abstechseite eingesetzt werden sollen, ist mindestens noch ein zweiter Werkzeughalter 162 mit einem weiteren Werkzeug 164 auf einer der Spindeltrommel 20 abgewandten Seite des Abstechschlittens 48 und/oder des Tragarms 108 vorgesehen, so daß, wie In Fig. 8 dargestellt, das in der Gegenspindel 70 gehaltene Werkstück in einer weiteren Bearbeitungsstellung auch an diesem Werkzeug 164 mittels der Gegenspindel 70 bearbeitbar ist, während beispielsweise noch die Gegenspindel 80 zum Abstechen In der Spindelstation T6 eingesetzt ist.

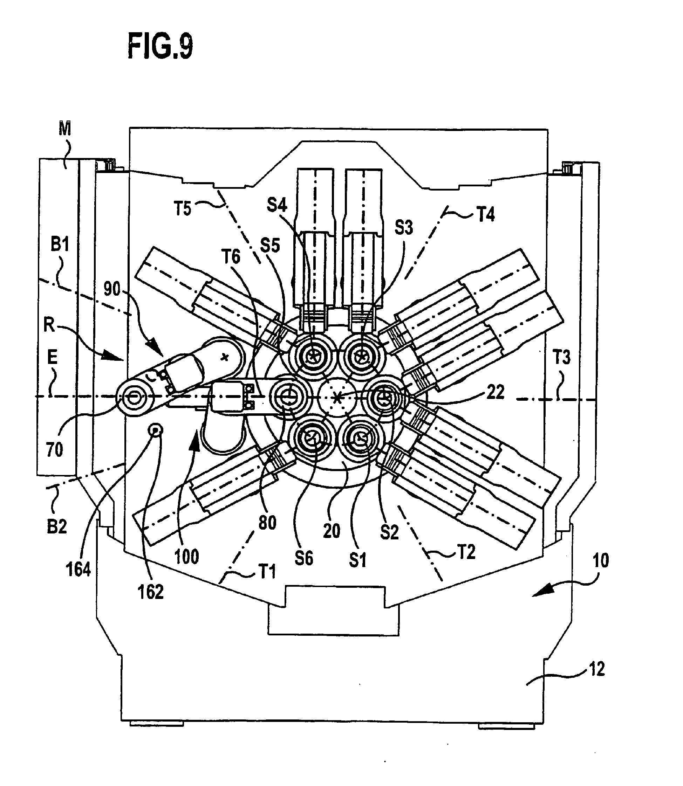

Nach endgültigem Fertigbearbeiten des Werkstücks W erfolgt, wie in Fig. 9 dargestellt, in einer Werkstückabgabestellung ein Ablegen des Werkstücks W in einer Werkstückabfuhreinrichtung 166, wobei die Gegenspindel 70 hierzu mit dieser fluchtend positionierbar ist, wie in Fig. 9 dargestellt.

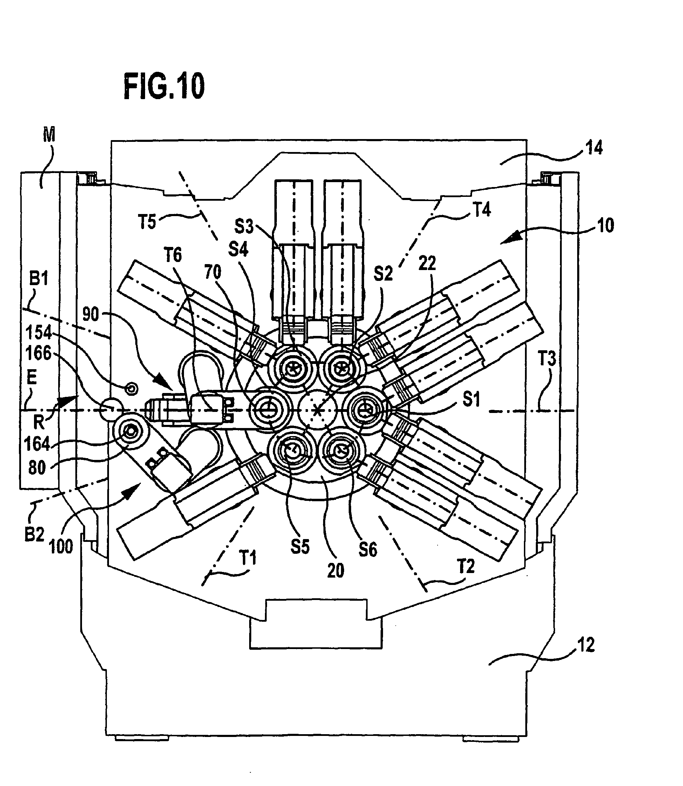

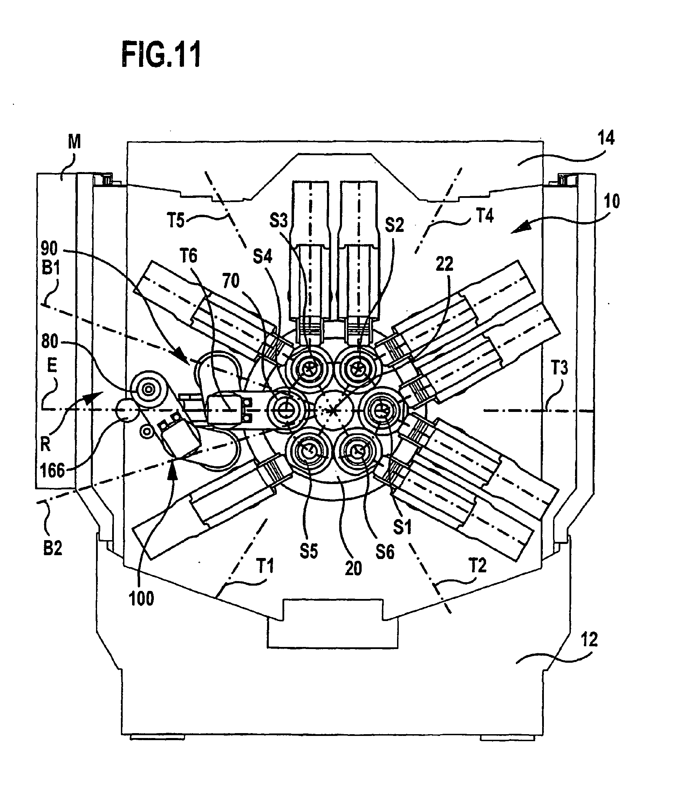

Während der Bearbeitung des von der Gegenspindel 70 gehaltenen Werkstücks W in seinem abstechseitigen Bereich wird auch das Abstechen des nächstfolgenden Werkstücks W In der Spindelstation T6 mittels der Gegenspindel 80 beendet, so daß, wie in Fig. 10 dargestellt, die Gegenspindel 70 wiederum zum Abstechen des nächsten in der Spindelstation T6 stehenden Werkstücks W in der Werkstückspindel S4 eingesetzt werden kann, während das von der Gegenspindel 80 gehaltene und abgestochene Werkstück W durch die Werkzeuge 154 und 164 bearbeitet werden kann, wie in den Fig. 10 und 11 dargestellt.

Anschließend erfolgt wieder, wie bereits In Fig. 1 dargestellt, ein Ablegen dieses Werkstücks durch geeignetes Ausrichten der Gegenspindel 80 zur Werkstückabführeinrichtung 166, wie in Fig. 1 dargestellt.

Zusammenfassend besteht somit die Möglichkeit, aufgrund der beiden Gegenspindeln 70 und 80, ohne Zeitverlust bei den Bearbeitungen der in den Werkstückspindein S der Spindettrommel 20 aufgenommenen Werkstücke W in der Werkstückentnahmestation T6 einen Abstechvorgang durchzuführen und gleichzeitig noch im Bereich der Abstechseite eine sogenannte Rückseitenbearbeitung der ansonsten bearbeiteten Werkstücke W vorzunehmen, ohne daß hierzu eine Mehrspindelwerkzeugmaschine mit Gegenspindeltrommel und einem zweiten Ständer zur Aufnahme der Gegenspindeltrommel erforderlich ist.

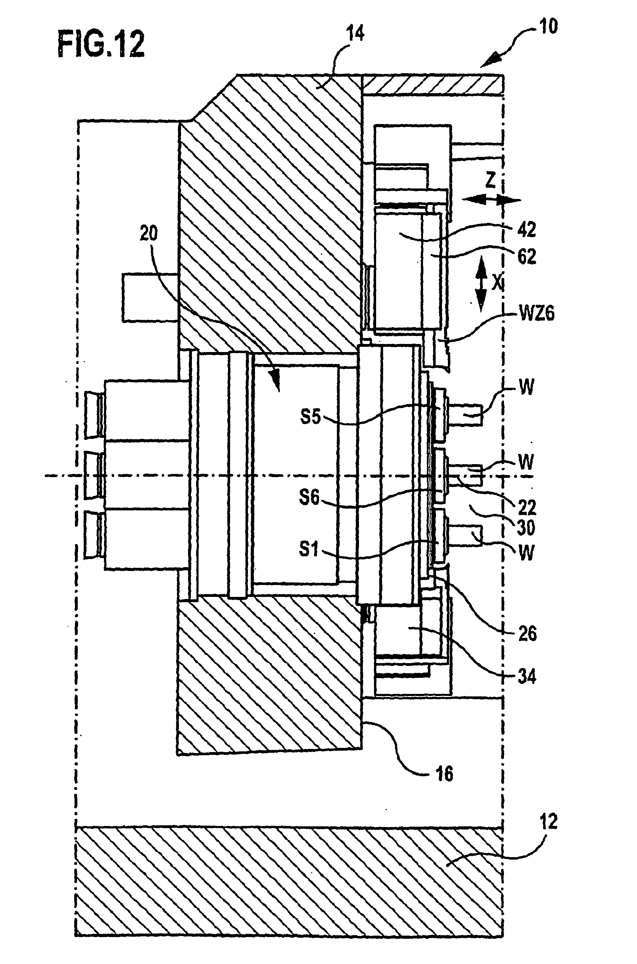

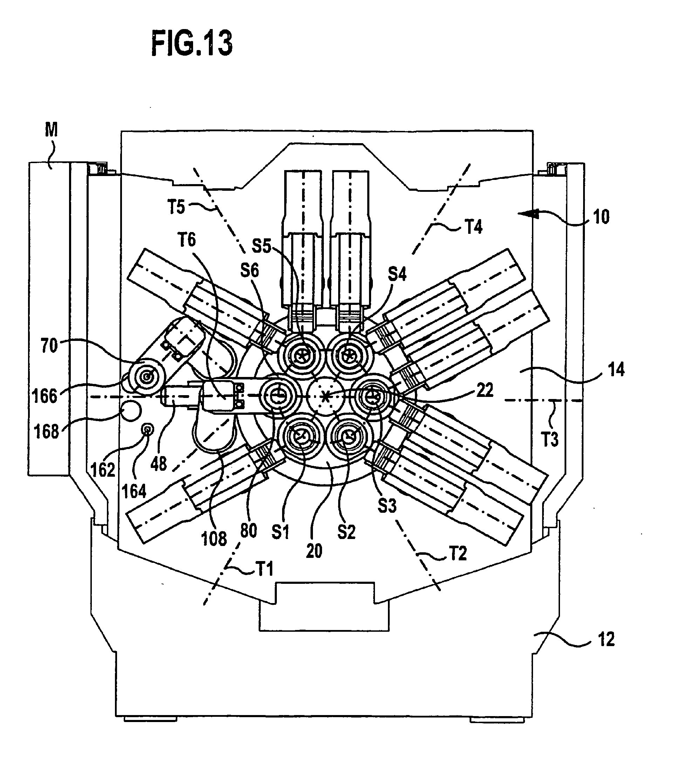

Bei einem zweiten Ausführungsbeispiel einer erfindungsgemäßen Werkzeugmaschine, dargestellt In den Fig. 12 und 13, ist nicht nur eine Werkstückabfuhreinrichtung 166 vorgesehen, sondern auch eine Werkstückzufuhreinrichtung 168, so daß die Werkstücke W nicht in Form der Werkstoffstange WS durch die einzelnen Werkstückspindeln S hindurch zugeführt werden, sondern über die Werkstückzufuhreinrichtung 168 zur Verfügung gestellt und von den Gegenspindeln 70 oder 80 in einer Werkstückaufnahmestellung in dieser aufgenommen werden können, wobei beispielsweise auch bereits vor dem Einsetzen der Werkstücke W in die Werkstückspindeln S der Spindeltrommel.20 ein erstes Bearbeiten der Werkstücke W in den Werkzeugen 154 und/oder 164 erfolgen kann, um somit bereits die Werkstücke W an einer bereits bearbeiteten Seite aufnehmen zu können und dann ausgehend von dieser exakt bearbeiteten Seite die Bearbeitung im Zuge eines Durchlaufs sämtlicher Spindel stationen T durchzuführen.

Das Einlegen der so vorbearbeiteten Werkstücke W erfolgt ebenfalls in einer Werkstückübergabestellung in der Spindelstation T6, die in diesem Fall sowohl als Werkstückeinsetzstation als auch als Werkstückentnahmestation ausgebildet ist, so daß die Gegenspindeln. 70 und 80 noch gleichzeitig zur Handhabung und Übernahme von fertig bearbeiteten Werkstücken W aus den Werkstückspindeln S der Spindeltrommel 20 vorgesehen sind.

Dabei kann nach Durchlaufen der Bearbeitungsstationen, beispielsweise der Spindelstationen T1 bis T5, nochmals eine Bearbeitung des vorderseitig fertig bearbeiteten Werkstücks W mittels der Gegenspindeln 70, 80 erfolgen oder unmittelbar ein Ablegen desselben in der Werkstückabführeinrichtung 166.

Beispielsweise sind derartige über die Werkstückzuführeinrichtung 168. zugeführte Werkstücke W sogenannte Futtertelle.

## Patentansprüche

1. Mehrspindeldrehmaschine umfassend ein Maschinengestell (10), eine am Maschinengestell (10) um eine Spindeltrommelachse (22) drehbar gelagerte Spindeltrommel (20), mindestens zwei in der Spindeltrommel (20) in Spindelpositionen angeordnete Werkstückspindeln (S), deren Werkstückaufnahme (24) jeweils um eine Spindelachse (A) drehbar ist, einen stirnseitig der Spindeltrommel (20) und der Werkstückspindeln (S) angeordneten Arbeitsraum (30), eine stationär am Maschinengestell (10) vorgesehene Vielzahl von Spindelstationen (T), in weiche die Werkstückspindeln (S) durch Drehen der Spindeltrommel (20) um die Spindeltrommelachse (22) bringbar sind, wobei ein Teil der Spindelstationen (T1 bis T5) als Bearbeitungsstationen ausgebildet ist, in denen eine Bearbeitung der Werkstücke (W) durchführbar ist, und wobei mindestens eine der Spindelstationen (T6) als Werkstückentnahmestation bzw. Werkstückeinsetzstation ausgebildet ist, ist, **dadurch gekennzeichnet, daß** der Werkstückentnahmestation bzw. Werkstückeinsetzstation (T6) eine um eine Achse (72) drehbare Werkstückaufnahme (74) zugeordnet ist, die mittels einer am Maschinengestell (10) angeordneten Trägereinrichtung (90, 100) relativ zu der in der Werkstückentnahmestation bzw. Werkstückeinsetzstation (T6) stehenden Werkstückspindel (S) mit mindestens einer radial zur Spindeltrommelachse (22) verlaufenden Richtungskomponente zwischen einer Werkstückübernahmestellung bzw. Werkstückübergabestellung, in welcher die Achse (72) koaxial zur Spindelachse (A) der in der Werkstückentnahmestation bzw. Werkstückeinsetzstation (T6) stehenden Werkstückspindel (S) steht, und einer Werkstückabgabestellung bzw. Werkstückaufnahmestellung bewegbar ist und die mittels der Trägereinrichtung (90, 100) in einer Z-Richtung parallel zu der Spindelachse (A) der in der Werkstückentnahmestation (T6) stehenden Werkstückspindel (S) bewegbar ist.

2. Mehrspindeldrehmaschine nach Anspruch 1, **dadurch gekennzeichnet, daß** eine Lagerung der Trägereinrichtung (90, 100) am Maschinengestell (10) außerhalb eines sich vor einer Stirnseite (26) der Spindeltrommel (20) und von dieser weg erstreckenden Raumbereichs (F) erfolgt.

3. Mehrspindeldrehmaschine nach Anspruch 1 oder 2, **dadurch gekennzeichnet, daß** die Trägereinrichtung (90, 100) auf derselben Seite des Arbeitsraums (30) am Maschinengestell (10) gelagert ist, wie die Spindeltrommel (20).

4. Mehrspindeldrehmaschine nach Anspruch 3, **dadurch gekennzeichnet, daß** die Trägereinrichtung (90, 100) an einem die Spindeltrommel (20) lagernden Ständer (14) des Maschinengestells (10) gelagert ist.

5. Mehrspindeldrehmaschine nach einem der voranstehenden Ansprüche, **dadurch gekennzeichnet, daß** die Trägereinrichtung (90, 100) einen am Maschinengestell (10) in einer Tragarmaufnahme (128) gelagerten Tragarm (98, 108) aufweist.

6. Mehrspindeldrehmaschine nach Anspruch 5, **dadurch gekennzeichnet, daß** der Tragarm (98, 108) in der Tragarmaufnahme (128) in Richtung parallel zu einer Spindelachse (A) der in der Werkstückentnahmestation (T6) stehenden Werkstückspindel (S) verschiebbar am Maschinengestell (10) gelagert ist.

7. Mehrspindeldrehmaschine nach einem der voranstehenden Ansprüche, **dadurch gekennzeichnet, daß** die Trägereinrichtung (90, 100) einen um eine Schwenkachse (96, 106) gegenüber dem Maschinengestell (10) schwenkbaren Arm (94, 104) aufweist.

8. Mehrspindeldrehmaschine nach Anspruch 7, **dadurch gekennzeichnet, daß** der Arm (94, 104) gegenüber dem Tragarm (98, 108) um die Schwenkachse (96, 106) verschwenkbar ist.

9. Mehrspindeldrehmaschine nach Anspruch 7 oder 8, **dadurch gekennzeichnet, daß** der Arm als Knickarm (94, 104) ausgebildet ist und zwei um ein Knickgelenk (92, 102) relativ zueinander bewegbare Teilarme (110, 114) aufweist.

10. Mehrspindeldrehmaschine nach einem der voranstehenden Ansprüche, **dadurch gekennzeichnet, daß** die drehbare Werkstückaufnahme (74) an einer Gegenspindel (70, 80) angeordnet ist.

11. Mehrspindeldrehmaschine nach Anspruch 10, **dadurch gekennzeichnet, daß** die Gegenspindel (70, 80) eine Synchronspindel ist.

12. Mehrspindeldrehmaschine nach einem der voranstehenden Ansprüche, **dadurch gekennzeichnet, daß** der Werkstückentnahmestation bzw. Werkstückeinsetzstation (T6) ein Abstechwerkzeug (AZ) zugeordnet ist.

13. Mehrspindeldrehmaschine nach einem der voranstehenden Ansprüche, **dadurch gekennzeichnet, daß** die Werkstückaufnahme (74) zusätzlich in eine Bearbeitungsstellung bringbar ist.

14. Mehrspindeldrehmaschine nach Anspruch 13, **dadurch gekennzeichnet, daß** die Bearbeitungsstellung bezüglich der Spindeltrommelachse (22) radial außerhalb der Spindeltrommel (20) angeordnet ist.

15. Mehrspindeldrehmaschine nach Anspruch 13 oder 14, **dadurch gekennzeichnet, daß** in der Bearbeitungsstellung mindestens ein stationäres Werkzeug (154, 164) vorgesehen ist.

16. Mehrspindeldrehmaschine nach einem der voranstehenden Ansprüche, **dadurch gekennzeichnet, daß** die drehbare Werkstückaufnahme (74) in einem Raumbereich (R) bewegbar ist, der zwischen zwei die Spindeltrommelachse (22) schneidenden Ebenen (B1, B2) liegt, welche zwischen sich einen Winkel von kleiner als 360° geteilt durch die Zahl der Spindelpositionen (P) einschließen.

17. Mehrspindeldrehmaschine nach Anspruch 16, **dadurch gekennzeichnet, daß** mindestens eine Ebene (B1, B2) durch die Spindeltrommelachse (22) und die Schwenkachse (96) der Trägereinrichtung (90, 100) hindurch verläuft.

18. Mehrspindeldrehmaschine nach Anspruch 16, **dadurch gekennzeichnet, daß** die Ebenen (B1, B2) durch die Spindeltrommelachse (22) und beiderseits von der Bearbeitungsstellung zugeordneten Werkzeugen (154, 164) verlaufen.

19. Mehrspindeldrehmaschine nach einem der voranstehenden Ansprüche, **dadurch gekennzeichnet, daß** die drehbare Werkstückaufnahme (74) mit ihrer Achse (72) auf einer Bahn bewegbar ist, die nahe einer durch die Spindeltrommelachse (22) und die Spindelachse (A) der in der Werkstückentnahmestation bzw. Werkstückeinsetzstation (T6) stehenden Werkstückspindel (S) verlaufenden Ebene (E) verläuft

20. Mehrspindeldrehmaschine nach einem der voranstehenden Ansprüche, **dadurch gekennzeichnet, daß** der Werkstückentnahmestation bzw. Werkstückeinsetzstation (T6) zwei jeweils mit einer Trägereinrichtung (90, 100) relativ zum Maschinengestell (10) bewegbare, drehbare Werkstückaufnahmen (74) zugeordnet sind.

21. Mehrspindeldrehmaschine nach Anspruch 20, **dadurch gekennzeichnet, daß** die beiden drehbaren Werkstückaufnahmen (74) mit ihrer Achse (72) jeweils auf Bahnen bewegbar sind, die nahe der Ebene (E) durch die Spindeltrommelachse (22) und die Spindelachse (A) der in der Werkstückentnahmestation bzw. Werkstückeinsetzstation (T6) stehenden Werkstückspindel (S) verlaufen.

22. Mehrspindeldrehmaschine nach einem der voranstehenden Ansprüche, **dadurch gekennzeichnet, daß** die drehbare Werkstückaufnahme (74) in eine Werkstückübernahmestellung bzw. Werkstückübergabestellung bewegbar ist.

## Claims

1. Multispindle lathe comprising a machine frame (10), a spindle drum (20) mounted on the machine frame (10) for rotation about a spindle drum axis (22), at least two workpiece spindles (S) arranged in spindle positions in the spindle drum (20) with their workpiece receiving means (24) rotatable about a respective spindle axis (A), a work area (30) arranged at the end face of the spindle drum (20) and the workpiece spindles (S), a plurality of spindle stations (T) provided stationarily on the machine frame (10), into which the workpiece spindles (S) are adapted to be brought by rotation of the spindle drum (20) about the spindle drum axis (22), some of the spindle stations (T1 to T5) being designed as machining stations for machining the workpieces (W) therein, and at least one of the spindle stations (T6) being designed as workpiece removal station or workpiece insertion station, **characterized in that** a workpiece receiving means (74) rotatable about an axis (72) is allocated to the workpiece removal station or workpiece insertion station (T6), the workpiece receiving means being movable by means of a carrier device (90, 100) arranged on the machine frame (10) relative to the workpiece spindle (S) located in the workpiece removal station or workpiece insertion station (T6) with at least one directional component extending radially to the spindle drum axis (22) between a workpiece take-over position or workpiece hand-over position, in which the axis (72) extends coaxially with the spindle axis (A) of the workpiece spindle (S) located in the workpiece removal station or workpiece insertion station (T6), and a workpiece delivery position or workpiece receiving position, and the workpiece receiving means being movable by means of the carrier device (90, 100) in a Z-direction parallel to the spindle axis (A) of the workpiece spindle (S) located in the workpiece removal station or workpiece insertion station (T6).

2. Multispindle lathe in accordance with claim 1, **characterized in that** the carrier device (90, 100) is mounted on the machine frame (10) outside a spatial area (F) extending in front of an end face (26) of the spindle drum (20) and away from the spindle drum (20).

3. Multispindle lathe in accordance with claim 1 or 2, **characterized in that** the carrier device (90, 100) is mounted on the machine frame (10) on the same side of the work area (30) as the spindle drum (20).

4. Multispindle lathe in accordance with claim 3, **characterized in that** the carrier device (90, 100) is mounted on a stand (14) of the machine frame (10) bearing the spindle drum (20).

5. Multispindle lathe in accordance with any one of the preceding claims, **characterized in that** the carrier device (90, 100) comprises a carrying arm (98, 108) mounted in a carrying arm holder (128) on the machine frame (10).

6. Multispindle iathe in accordance with claim 5, **characterized in that** the carrying arm (98, 108) is mounted in the carrying arm holder (128) on the machine frame (10) for displacement in a direction parallel to a spindle axis (A) of the workpiece spindle (S) located in the workpiece removal station or workpiece insertion station (T6).

7. Multispindle lathe in accordance with any one of the preceding claims, **characterized in that** the carrier device (90, 100) comprises an arm (94, 104) pivotable about a pivot axis (96, 106) relative to the machine frame (10).

8. Multispindle lathe in accordance with claim 7, **characterized in that** the arm (94, 104) is pivotable about the pivot axis (96, 106) relative to the carrying arm (98, 108).

9. Multispindle lathe in accordance with claim 7 or 8, **characterized in that** the arm is constructed as a jointed arm (94, 104) and comprises two sectional arms (110, 114) movable relative to each other about a joint (92, 102).

10. Multispindle lathe in accordance with any one of the preceding claims, **characterized in that** the rotatable workpiece receiving means (74) is arranged on an opposed spindle (70, 80).

11. Multispindle lathe in accordance with claim 10, **characterized in that** the opposed spindle (70, 80) is a synchronized spindle.

12. Multispindle lathe in accordance with any one of the preceding claims, **characterized in that** a cut-off tool (AZ) is allocated to the workpiece removal station or workpiece insertion station (T6).

13. Multispindle lathe in accordance with any one of the preceding claims, **characterized in that** the workpiece receiving means (74) is adapted to be additionally brought into a machining position.

14. Multispindle lathe in accordance with claim 13, **characterized in that** the machining position is arranged radially outside of the spindle drum (20) with respect to the spindle drum axis (22).

15. Multispindle lathe in accordance with claim 13 or 14, **characterized in that** at least one stationary tool (154, 164) is provided in the machining position.

16. Multispindle lathe in accordance with any one of the preceding claims, **characterized in that** the rotatable workpiece receiving means (74) is movable in a spatial area (R) lying between two planes (B1, B2) which intersect the spindle drum axis (22) and include between them an angle of less than 360° divided by the number of spindle positions (P).

17. Multispindle lathe in accordance with claim 16, **characterized in that** at least one plane (B1, B2) extends through the spindle drum axis (22) and the pivot axis (96) of the carrier device (90, 100).

18. Multispindle lathe in accordance with claim 16, **characterized in that** the planes (B1, B2) extend through the spindle drum axis (22) and on both sides of tools (154, 164) allocated to the machining position.

19. Multispindle lathe in accordance with any one of the preceding claims, **characterized in that** the rotatable workpiece receiving means (74) is movable with its axis (72) on a path extending close to a plane (E) extending through the spindle drum axis (22) and the spindle axis (A) of the workpiece spindle (S) located in the workpiece removal station or workpiece insertion station (T6).

20. Multispindle lathe in accordance with any one of the preceding claims, **characterized in that** two rotatable workpiece receiving means (74), each movable with a carrier device (90, 100) relative to the machine frame (10), are allocated to the workpiece removal station or workpiece insertion station (T6).

21. Multispindle lathe in accordance with claim 20, **characterized in that** the two rotatable workpiece receiving means (74) are each movable with their axis (72) on paths extending close to the plane (E) through the spindle drum axis (22) and the spindle axis (A) of the workpiece spindle (S) located in the workpiece removal station or workpiece insertion station (T6).

22. Multispindle lathe in accordance with any one of the preceding claims, **characterized in that** the rotatable workpiece receiving means (74) is movable into a workpiece take-over position or workpiece hand-over position.

## Revendications

1. Tour multibroche comprenant un bâti de machine (10), un tambour porte-broche (20) logé au bâti de machine de façon rotative autour d'un axe de tambour porte-broche (22), au moins deux broches porte-pièce (S) disposées dans le tambour porte-broche (20) dans des positions de broche, dont le logement de pièce (24) peut tourner respectivement autour d'un axe de broche (A), un espace de travail (30) disposé sur le côté avant du tambour porte-broche (20) et des broches porte-pièce (S), une pluralité de stations de broche (T) prévues de façon fixe sur le bâti de machine (10), dans lesquelles les broches porte-pièce (S) peuvent être amenées par rotation du tambour porte-broche (20) autour de l'axe du tambour porte-broche (22), une partie des stations de broche (T1 à T5) étant conçue comme des stations d'usinage, dans lesquelles un usinage des pièces (W) peut être effectué, et au moins une des stations de broche (T6) étant conçue comme station de prélèvement de pièce ou station d'insertion de pièce, **caractérisée en ce qu'**à la station de prélèvement de pièce ou la station d'insertion de pièce est attribué un logement de pièce (74) pouvant tourner autour d'un axe (72), le logement de pièce (74) pouvant être déplacé au moyen d'un dispositif support (90, 100) disposé sur le bâti de machine (10) par rapport à la broche porte-pièce (S) étant dans la station de prélèvement de pièce ou la station d'insertion de pièce (T6) avec au moins une composante de direction agencée radialement à l'axe du tambour porte-broche (22) entre une position de prise en charge de pièce ou une position de remise de pièce, dans laquelle l'axe (72) est sur le même axe que l'axe de broche (A) de la broche porte-pièce (s) étant dans la station de prélèvement de pièce ou la station d'insertion de pièce (T6), et une position de livraison de pièce ou de réception de pièce et qui peut être déplacée au moyen du dispositif support (90, 100) dans une direction Z parallèlement à l'axe de broche (A) de la broche porte-pièce (S) étant dans la station de prélèvement de pièce ou la station d'insertion de pièce (T6).

2. Tour multibroche selon la revendication 1, **caractérisée en ce qu'**un montage du dispositif support (90, 100) sur le bâti de machine (10) s'effectue à l'extérieur d'une zone d'espace (F) s'étendant avant un côté avant (26) du tambour porte-broche (20) et à partir de celui-ci.

3. Tour multibroche selon la revendication 1 ou 2, **caractérisée en ce que** le dispositif support (90, 100) est monté sur le bâti de machine (10) sur le même côté de l'espace de travail (30) que le tambour porte-broche (20) .

4. Tour multibroche selon la revendication 3, **caractérisée en ce que** le dispositif support (90, 100) est monté sur un montant (14), montant le tambour porte-broche (20), du bâti de machine (10).

5. Tour multibroche selon l'une quelconque des revendications précédentes, **caractérisée en ce que** le dispositif support (90, 100) présente un bras support (98, 108) monté sur le bâti de machine (10) dans un logement de bras support (128).

6. Tour multibroche selon la revendication 5, **caractérisée en ce que** le bras support (98, 108) est monté sur le bâti de machine (10) de façon à pouvoir coulisser dans le logement de bras support (128) dans la direction parallèle à un axe de broche (A) de la broche porte-pièce (S) verticale dans la station de prélèvement de pièce ou la station d'insertion de pièce (T6).

7. Tour multibroche selon l'une quelconque des revendications précédentes, **caractérisée en ce que** le dispositif support (90, 100) présente un bras pouvant basculer autour d'un axe de pivotement (96, 106) par rapport au bâti de machine (10).

8. Tour multibroche selon la revendication 7, **caractérisée en ce que** le bras (94, 104) peut basculer par rapport au bras support (98, 108) autour de l'axe de pivotement (96, 106).

9. Tour multibroche selon la revendication 7 ou 8, **caractérisée en ce que** le bras est conçu comme bras pliant (94, 104) et présente deux bras partiels (110, 114) pouvant se déplacer autour d'une articulation pliante (92, 102) l'un par rapport à l'autre.

10. Tour multibroche selon l'une quelconque des revendications précédentes, **caractérisée en ce que** le logement de pièce (74) rotatif est disposé dans une contre-broche (70, 80).

11. Tour multibroche selon la revendication 10, **caractérisée en ce que** la contre-broche (70, 80) est une broche synchrone.

12. Tour multibroche selon l'une quelconque des revendications précédentes, **caractérisée en ce qu'**un outil de décolletage (AZ) est attribué à la station de prélèvement de pièce ou la station d'insertion de pièce (T6).

13. Tour multibroche selon l'une quelconque des revendications précédentes, **caractérisée en ce que** le logement de pièce (74) peut être mis en supplément dans une position d'usinage.

14. Tour multibroche selon la revendication 13, **caractérisée en ce que** la position d'usinage est disposée par rapport à l'axe du tambour porte-broche (22) radialement à l'extérieur du tambour porte-broche (20).

15. Tour multibroche selon la revendication 13 ou 14, **caractérisée en ce qu'**au moins un outil (154, 164) fixe est prévu dans la position d'usinage.

16. Tour multibroche selon l'une quelconque des revendications précédentes, **caractérisée en ce que** le logement d'outil (74) rotatif peut être déplacé dans une zone d'espace (R) qui est située entre deux plans (B1, B2) coupant l'axe du tambour porte-broche (22), qui incluent un angle inférieur à 360° divisé par le nombre des positions de broche (P).

17. Tour multibroche selon la revendication 16, **caractérisée en ce qu'**au moins un plan (B1, B2) passe à travers l'axe du tambour porte-broche (22) et l'axe de pivotement (96) du dispositif support (90, 100).

18. Tour multibroche selon la revendication 16, **caractérisée en ce que** les plans (B1, B2) passent par l'axe du tambour porte-broche (22) et des deux côtés d'outil (154, 164) attribués à la position d'usinage.

19. Tour multibroche selon l'une quelconque des revendications précédentes, **caractérisée en ce que** le logement de pièce (74) rotatif peut être déplacé avec son axe (72) sur une trajectoire qui est agencée à proximité d'un plan (E) passant par l'axe du tambour porte-broche (22) et l'axe de broche (A) de la broche porte-pièce (S) étant dans la station de prélèvement de pièce ou la station d'insertion de pièce (T6).

20. Tour multibroche selon l'une quelconque des revendications précédentes, **caractérisée en ce qu'**à la station de prélèvement de pièce ou la station d'insertion de pièce (T6) sont attribués deux logements de pièce (74) rotatifs et pouvant être déplacés respectivement avec un dispositif support (90, 100) par rapport au bâti de machine (10).

21. Tour multibroche selon la revendication 20, **caractérisée en ce que** les deux logements de pièce (74) rotatifs peuvent être déplacés avec leur axe (72) respectivement sur des trajectoires qui sont agencées à proximité du plan (E) passant par l'axe du tambour porte-broche (22) et l'axe de broche (A) de la broche porte-pièce (s) étant dans la station de prélèvement de pièce ou la station d'insertion de pièce (T6).

22. Tour multibroche selon l'une quelconque des revendications précédentes, **caractérisée en ce que** le logement de pièce (74) rotatif peut être déplacé dans une position de prise en charge de pièce ou une position de remise de pièce.
